# EUROPEAN PATENT APPLICATION

(11) **EP 4 563 343 A1**
(43) Date of publication of application: **04.06.2025**
(21) Application number: 23872710.1
(22) Date of filing: 27.06.2023
(51) Int. Cl.: B32B 27/08, B32B 7/023, B32B 27/28, B32B 27/36, B32B 7/022, B32B 27/34, B32B 7/12

(54) **MULTILAYER FILM, PROTECTIVE FILM, AND MULTILAYER ELECTRONIC DEVICE**

(30) Priority: 27.09.2022 KR 20220122681; 27.09.2022 KR 20220122683
(71) Applicant: SK microworks Co., Ltd., Chungcheongbuk-do 27818 (KR)
(72) Inventor: JANG, Kwangho, Suwon-si, Gyeonggi-do 16338 (KR); HAN, Kweonhyung, Suwon-si, Gyeonggi-do 16338 (KR)
(74) Representative: BCKIP Part mbB
(86) International application number: PCT/KR2023/008967
(87) International publication number: WO 2024/071583

(57) **Abstract**

Embodiments relate to a multilayer film, a protective film, and a multilayer electronic device, wherein the multilayer film is flexible over a wide temperature range and has excellent and long-lasting optical properties. The multilayer film includes: a first layer having first side and second side; a second layer disposed on the first side of the first layer; and a third layer disposed under the second side of the first layer, wherein the first layer includes a first polymer resin, the first polymer resin includes a repeating unit S, the repeating unit S is an ether repeating unit or an ester repeating unit, and the difference in haze value before and after exposure to air for 168 hours is 1.2% or less.

## Description

### BACKGROUND

### 1. Field

Embodiments relate to a multilayer film, protective films, and multilayer electronic device that exhibit excellent optical properties while maintaining flexible characteristics across a wide temperature range.

### 2. Description of Related Art

Display devices are diversifying in form and changing in the functionality they require, evolving from wider screens to thinner, more functional forms. The shape of displays is also changing, evolving from flat to curved, and then to foldable, bendable, flexible, and so on. In other words, the shape of recent displays is changing from simply evolving in the direction of large area in that it can change shape, such as folding and bending.

PET film, which exhibits excellent properties such as mechanical strength, chemical resistance, and moisture barrier performance, is widely used as a protective film for display screens. Examples include polyester protective film (Korean Patent No. 10-1730854), which has improved optical properties and may be applied as a protective film for polarizers, and protective film for touch panels (Korean Patent No. 10-1746170). However, PET films have a high modulus and may not satisfy the required properties on curved surfaces or bends, which may be one of the causes of film lifting in devices with multi-layer displays.

Furthermore, compared to the rigid glass traditionally used to protect the display module of portable electronic devices, PET film has weaker impact absorption properties (the ability to protect internal components such as the display module from external impacts), making it limited in providing sufficient protection.

On the other hand, protective films may be applied for different purposes depending on their performance.

Protective films may be applied as screen protection films in multi-layer electronic devices with display functions such as cell phones, laptops, monitors, etc. With the recent emergence of flexible devices, protective films for this application are now required to have high impact resistance, excellent optical properties, and durability against repeated folding and similar stresses.

The protective film may also be applied as a paint protection film. A paint protection film protects the painted surface from external impacts. For example, automotive paint protection films are called paint protection films (PPF). Paint protection films require impact resistance and good workability, such as good stretchability on curved and curved surfaces.

The foregoing background description is technical information that the inventor had in his possession or learned in the course of deriving embodiments of the present invention and does not necessarily constitute prior art available to the general public prior to the filing of this application.

### SUMMARY

An objective of the embodiments is to provide a multilayer film, protective films, and multilayer electronic device that have flexible properties over a wide temperature range and excellent optical properties.

A multilayer film according to one embodiment, includes a first layer having a first side and a second side; a second layer disposed on the first side of the first layer; and a third layer disposed beneath the second side of the first layer, wherein the first layer includes a first polymeric resin, the first polymeric resin includes repeating units S, and the repeating units S are ether repeating units or ester repeating units.

The multilayer film may have a haze value difference of 1.2% or less before and after being exposed to air for 168 hours.

The repeating units S may include at least 20 wt% in the first polymeric resin.

The multilayer film may have a haze of 3% or less.

The multilayer film may have a thickness ratio of the second layer and the first layer of 1: 0.01 to 20.

A Shore D hardness of the second layer or the third layer may be 60 or more.

The multilayer film may have a storage modulus of 1200 MPa or less at about 25°C.

The multilayer film may have a storage modulus of 1200 MPa or less at about 0°C.

The second layer may include a second polymeric resin, the third layer may include a third polymeric resin, and the second polymeric resin and the third polymeric resin may include amide repeating units.

The third layer may be an adhesive layer.

A protective film according to another embodiment includes a release layer and a multilayer film disposed on the release layer, wherein the multilayer film is a multilayer film according to the embodiment described above.

In another embodiment, a multilayer electronic device includes a multilayer film as described above.

### BRIEF DESCRIPTION OF THE DRAWINGS

FIG. 1 is a conceptual diagram illustrating a cross-sectional view of the structure of a multilayer film, according to an embodiment.
FIG. 2 is a conceptual diagram illustrating a cross-sectional view of the structure of a multilayer film, according to another embodiment.
FIG. 3 is a conceptual diagram illustrating a cross-sectional view of the structure of a multilayer film according to another embodiment.
FIG. 4 is a conceptual diagram illustrating a cross-sectional view of the structure of a multilayer electronic device, according to an embodiment.

### DETAILED DESCRIPTION

Hereinafter, embodiments of the present invention will be described in detail with reference to the accompanying drawings to facilitate practice by those having ordinary skill in the technical field to which the invention belongs. However, the invention may be implemented in many different forms and is not limited to the embodiments described herein. Throughout the specification, similar parts are designated with the same reference numerals.

In the specification, when a configuration is said to "include or comprise" another configuration, it is meant to be inclusive of the other configuration, not exclusive of the other configuration, unless specifically stated to the contrary.

In the specification, when a configuration is said to be "connected" to another configuration, it is not limited to being "directly connected" but also includes being "connected with another configuration in between".

In the specification, the reference to B being positioned on A means B being positioned on A with B directly abutting A or in any other configuration therebetween, and shall not be construed to be limited to B being positioned abutting the surface of A.

In the specification, the term "combination thereof" as used in a Markush-style representation means one or more mixtures or combinations selected from the group of components described in the Markush-style representation, and includes one or more selected from the group of components.

In the specification, references to "A and/or B" shall mean "A, B, or, A and B".

In the specification, terms such as "first", "second" or "A", "B" are used to distinguish one from the other unless otherwise indicated.

In the specification, singular expressions shall, unless otherwise indicated, be construed to include the singular or plural as construed from the context.

In the specification, storage modulus is measured on a TA instruments DMA Q800 model, in accordance with ASTM D4065, over a range of -50°C to 100°C. Measurements results are based on 1 Hz in Dynamic Mechanical Analysis (DMA) with tension mode and a heating rate of 2 °C/min.

In the specification, room temperature is assumed to be about 20 °C and ambient temperature is assumed to be about 25 °C.

In the specification, letters and/or numbers in combination with the name of a compound mean an abbreviation for the name of the compound.

In the specification, the upper and lower levels of each layer are described with reference to the drawings. However, the location of each layer is not to be construed as limited to the layer structure and location shown in the drawings, and the distinction between upper and lower is to be understood as a relative concept to describe the location of each layer.

In the specification, the relative sizes, thicknesses, etc. of the configurations shown in the drawings may be exaggerated for purposes of illustration.

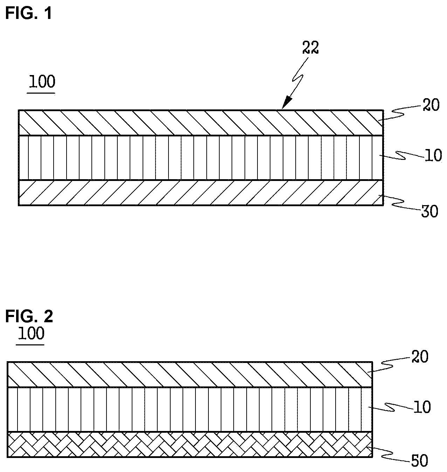

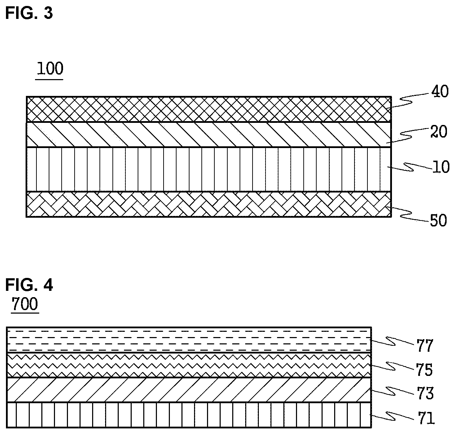

FIG. 1 is a conceptual diagram illustrating a cross-sectional view of a structure of a multilayer film according to an embodiment, and FIG. 2 is a cross-sectional view of a structure of a multilayer film according to another embodiment. FIG. 3 is a cross-sectional view of a structure of a multilayer film according to another embodiment, and FIG. 4 is a cross-sectional view of a structure of a multilayer electronic device according to an embodiment. Referring to FIGS. 1 through 4, the following embodiments will be described in more detail.

### Multilayer Film 100

To accomplish the above objectives, a multilayer film 100 according to an embodiment comprises a first layer 10 having a first side and a second side; a second layer 20 disposed on the first side of the first layer; and a third layer 30 disposed beneath the second side of the first layer (see FIG. 1).

The first layer 10 comprises a first polymeric resin, the first polymeric resin comprises a repeating unit S, and the repeating unit S is an ether repeating unit or an ester repeating unit.

The multilayer film 100 according to the embodiment has a haze value difference of 1.2% or less before and after 168 hours of being exposed to air.

The repeating unit S is contained in the first layer, which may contribute to improving the flexibility of the film. In particular, the repeating unit S may be contained in the first polymer resin together with the repeating unit H described below to help control the degree of flexibility or elasticity. Furthermore, by utilizing such a first polymer resin and manufacturing the film while controlling various properties of the film, it is possible to provide a film having excellent flexibility, elasticity, optical properties, etc.

However, when the first polymer resin containing the repeating unit S is applied in the form of a film, an increase in haze may be observed over a long period of time. After repeated tests, the inventors have determined that the above phenomenon is caused by the migration of the oligomer corresponding to the repeating unit S from the inside of the first layer to the surface. In order to suppress this haze change, the inventors applied various methods and found that organizing the first layer in the form of a three-layer multilayer film as shown in the embodiment is effective in substantially suppressing direct contact of air with the surface of the first layer, while at the same time achieving the desired effects of the first layer, such as flexibility and elasticity.

In other words, when applied in the form of three-layer film, the multi-layer film of the embodiment, the haze may be substantially unchanged even when exposed to air for a long period of time, while maintaining the advantages of the first layer to a certain extent.

Specifically, the multilayer film of an embodiment may have a difference in haze value between before and after 168 hours of being exposed to air, which may be 1.2% or less, 1.0% or less, 0.8% or less, 0.5% or less, or 0.3% or less. That may be greater than 0%.

The first polymeric resin may comprise 20 wt% or more of the repeating units S.

The first polymeric resin may comprise 30 wt% or more of the repeating units S.

The first polymeric resin may comprise 40 wt% or more of the repeating units S.

The first polymeric resin may comprise 50 wt% or more of the repeating units S.

The first polymeric resin may comprise 60 wt% or more of the repeating units S.

The first polymeric resin may comprise 70 wt% or more of the repeating units S.

The first polymeric resin may comprise 100 wt% or less of the repeating units S, or may comprise 90 wt% or less.

The repeating unit S may comprise an ether repeating unit and/or an ester repeating unit.

The first polymeric resin may comprise 20 wt% or more, 30 wt%, 40 wt% or more, 50 wt% or more, 60 wt% or more, or 70 wt% or more of the sum of the ether repeating units and the ester repeating units. The first polymeric resin may comprise 100 wt% or less, or 90 wt% or less of the sum of the ether repeating units and the ester repeating units.

The repeating unit S may comprise a tetramethylene oxide residue, an ethylene oxide residue, and/or a propylene oxide residue.

The first polymeric resin may comprise 20 wt% or more, 30 wt% or more, 40 wt% or more, 50 wt% or more, 60 wt% or more, or 70 wt% or more of the sum of the tetramethylene oxide residues, ethylene oxide residues, and propylene oxide residues. The first polymeric resin may comprise 100 wt% or less, or 90 wt% or less of the sum of the tetramethylene oxide residues, ethylene oxide residues, and propylene oxide residues.

For example, the repeating unit S may comprise -CH₂-CH₂-CH₂-CH₂-O-, -CH₂-CH₂-O-, and/or -CH₂(-CH₂)-CH₂-O-.

The first polymeric resin may comprise 20 wt% or more, 30 wt% or more, 40 wt% or more, 50 wt% or more, or 70 wt% or more of the sum of -CH₂-CH₂-CH₂-CH₂-O-, -CH₂-CH₂-O-, and -CH₂(-CH₂)-CH₂-O-. The first polymeric resin may comprise 100 wt% or less, or 90 wt% or less of the sum of -CH₂-CH₂-CH₂-CH₂-O-, -CH₂-CH₂-O-, and -CH₂(-CH₂)-CH₂-O-.

The first polymeric resin may further comprise a repeating unit H. The repeating unit H may contribute to improving the hardness of the film. The repeating unit H may act in conjunction with the repeating unit S described above to impart to the film properties such as flexibility and the ability to remain flexible and elastic over a relatively wide temperature range.

The first polymeric resin may comprise 80 wt% or less of the repeating units H.

The first polymeric resin may comprise 70 wt% or less of the repeating units H.

The first polymeric resin may comprise 60 wt% or less of the repeating units H.

The first polymeric resin may comprise 50 wt% or less of the repeating units H.

The first polymeric resin may comprise 40 wt% or less of the repeating units H.

The first polymeric resin may comprise 30 wt% or less of the repeating units H.

The first polymeric resin may comprise 0 wt% or more, or 10 wt% or more of the repeating units H.

The repeating unit H may comprise a polyamide residue.

The first polymeric resin may comprise 80 wt% or less, 70 wt% or less, 60 wt% or less, 50 wt% or less, 40 wt% or less, or 30 wt% or less of polyamide residues. The first polymeric resin may comprise 0 wt% or more, or 10 wt% or more of polyamide residues.

The polyamide residue may be, for example, an aliphatic polyamide residue, a semi-aromatic polyamide residue, a semi-crystalline polyamide residue, an amorphous polyamide residue, or a mixture thereof.

The first polymeric resin may comprise 80 wt% or less, 70 wt% or less, 60 wt% or less, 50 wt% or less, 40 wt% or less, or 30 wt% or less of the sum of aliphatic polyamide residues, semi-aromatic polyamide residues, semi-crystalline polyamide residues, and amorphous polyamide residues. The first polymeric resin may comprise 0 wt% or more, or 10 wt% or more of the sum of aliphatic polyamide residues, semi-aromatic polyamide residues, semi-crystalline polyamide residues, and amorphous polyamide residues.

Aliphatic polyamide residues may be, for example, polycaprolactam (PA 6), polyundecanamide (PA 11) residues, poly-lauryllactam (PA 12) residues, polybutylene adipamide (PA 46) residues, polyhexamethylene adipamide (PA 66) residues, polyhexamethylene azelamide (PA 69) residues, polyhexamethylene sebacamide (PA 610) residues, polyhexamethylene dodecanediamide (PA 612) residues, polydecamethylene dodecanediamide (PA 1012) residues, polydecamethylene sebacamide, PA 1010) residues, polydodecamethylene dodecanediamide (PA 1212) residues, polyamide copolymer PA 11/NHUA residues, PA BACM6 residues, PA BACM10 residues, PA BACM12 residues, PA 6/66 residues, or PA 6/12 residues.

The semi-aromatic polyamide residues may be PA 6/6T residues, PA 66/6T residues, PA 6T/6I residues, PA 66/6T/6I residues, PA 11/6T residues, PA 12/6T residues, PA MXD6 residues, or PA MXD10 residues.

The semi-crystalline polyamide residues may be PA 6 residues, PA 11 residues, PA 12 residues, PA 10.10 residues, PA 10.12 residues, PA 6.10 residues, or PA 6.12 residues.

The amorphous polyamide residues may be polyhexamethylene isophthalamide (PA 6I) residues, polytrimethylhexamethylene terephthalamide (PA TMHMDAT) residues, and PA BACM12 residues; Amide copolymers comprising PA 6/BMACPI residues, PA 6/BAMNT residues, PA 11/BMACMI residues, PA 11/BMACMT/BMACMI residues, PA 11/BACM.I/IPDA.I residues, PA 12/BMACM.I residues, PA 12/BACMT/BACMI residues, PA 12/BMACMT/BACMI residues, PA 12/BACMI/IPDAI residues, PA 6T/6I/BACMI residues, or PA 6T/6I/BACMT/BACMI residues.

The first polymeric resin applied to the first layer 10 may be, for example, PEBAX^{®} 25R53, PEBAX^{®} 35R53, PEBAX^{®} 40R53, PEBAX^{®} 55R53 of ARKEMA FRANCE or equivalent products.

The second layer 20 and the third layer 30 are disposed on one side and the other side of the first layer 10, respectively. Thereby, the second and third layers ensure that the surface of the first layer is substantially not in direct contact with air. The multilayer film thus arranged substantially suppresses haze changes that may occur when the first layer is exposed to air. For the PEBAX^{®} resin, the content of repeating units corresponding to repeating units S in commercially available products as of 2022 ranges from about 5 wt% to about 81 wt%. The inventors have experimentally confirmed that when monolayer films are prepared using the above resins, the higher the content of repeating unit S, the more severe the haze change tends to be. Specifically, the haze change of the film was more noticeable when the content of the repeating unit S was 20 wt% or more. Embodiments can substantially suppress the haze change while applying the above resin, thereby providing a film with excellent optical properties.

The second layer 20 of the embodiment may be arranged with a layer having a high hardness. By adopting a layer having a high hardness as the second layer, the effect of preventing damage to the surface of the first layer, which has a relatively low hardness, is also obtained.

The second layer 20 may comprise a second polymeric resin.

The second layer 20 may be, for example, an elastomeric layer. The second polymeric resin may be an elastomeric resin.

The second layer 20 may be, for example, a polymeric resin layer comprising amide residues. The second polymeric resin may be a polymeric resin comprising amide residues.

The second layer 20 may be, for example, an elastomeric polyamide layer. The second polymeric resin may be an elastomeric polyamide resin.

The second layer 20 may be, for example, a polyether block amide layer. The second polymer resin may be a polyether block amide resin. When the second polymeric resin is a polyether block amide resin, the content of tetramethylene oxide residues, ethylene oxide residues, and/or propylene oxide residues contained in the resin may be less than 20 wt% based on the total of the resin. In this case, the degree to which the haze changes over time may be better suppressed.

The second layer 20 may be, for example, a thermoplastic polyurethane layer. The second polymeric resin may be a thermoplastic polyurethane resin.

The second layer 20 may be, for example, a polyether ester copolymer layer. The second polymer resin may be a polyether ester copolymer resin.

The second layer 20 may be, for example, a film layer.

The second layer 20 may be, for example, a coating layer.

If a layer having amide residues is applied as the second layer 20, it may have a relatively good bonding force with the first layer.

The second polymeric resin applied to the second layer 20 may be, for example, PEBAX^{®}72R53, PEBAX^{®}Clear1200, Rilsan ^{®}BESNO from ARKEMA FRANCE or equivalent.

The second layer 20 may be applied with a layer having a hardness greater than the first layer 10. Specifically, the second layer 20 may have a surface hardness of 60 or greater, or may have a surface hardness of 68 or greater. The surface hardness may be 80 or less. The surface hardness is based on a Shore D hardness measured on the surface of the second layer according to ASTM D2240.

In an embodiment, the thickness ratio of the first layer 10 and the second layer 20 may be 1: 0.01 to 20. The thickness ratio may be 1: 0.01 to 5, 1: 0.01 to 2, or 1: 0.03 to 1.2. The thickness ratio may be 1: 0.04 to 0.5, or 1: 0.05 to 0. 0.3. When the first and second layers are applied at these thickness ratios, an excellent multilayer film may be provided that has both good surface hardness and elasticity, and substantially no change in haze even when exposed to air for relatively long periods of time.

The first layer 10 may be a more flexible layer than the second layer 20.

The storage modules of the first layer 10 may be smaller than the storage modules of the second layer 20.

At room temperature, the storage modules of the first layer 10 may be smaller than the storage modules of the second layer 20. At 0°C, the storage modules of the first layer 10 may be smaller than the storage modules of the second layer 20. At -20°C, the storage modules of the first layer 10 may be smaller than the storage modules of the second layer 20. At -40°C, the storage modulus of the first layer 10 may be smaller than the storage modulus of the second layer 20. In this case, the multilayer film may have more stable flexible properties.

The third layer 30 of the embodiment may be arranged with a layer having a high hardness. By adopting a layer having a high hardness as the third layer, the effect of preventing damage to the surface of the first layer, which has a relatively low hardness, is also obtained.

The third layer 30 may comprise a third polymeric resin.

The third layer 30 may be, for example, an elastomeric layer. The third polymeric resin may be an elastomeric resin.

The third layer 30 may be, for example, a polymeric resin layer comprising amide residues. The third polymeric resin may be a polymeric resin comprising amide residues.

The third layer 30 may be, for example, an elastomeric polyamide layer. The third polymeric resin may be an elastomeric polyamide resin.

The third layer 30 may be, for example, a polyether block amide layer. The third polymer resin may be a polyether block amide resin. When the third polymer resin is a polyether blockamide resin, the content of tetramethylene oxide residues, ethylene oxide residues, and/or propylene oxide residues contained in the resin may be less than 20 wt% based on the total of the resin. In this case, the degree to which the haze changes over time may be better suppressed.

The third layer 30 may be, for example, a thermoplastic polyurethane layer. The third polymeric resin may be a thermoplastic polyurethane resin.

The third layer 30 may be, for example, a polyether ester copolymer layer. The third polymer resin may be a polyether ester copolymer resin.

The third layer 30 may be, for example, a film layer.

The third layer 30 may be, for example, a coating layer.

If a layer having amide residues is applied as the third layer 30, it may have a relatively good bonding force with the first layer.

The third polymeric resin applied to the third layer 30 may be, for example, PEBAX^{®}72R53, PEBAX^{®}Clear1200, Rilsan^{®}BESNO from ARKEMA FRANCE or equivalent.

The third layer 30 may be applied with a layer having a hardness greater than the first layer 10. Specifically, third layer 30 may have a surface hardness of 60 or greater, or may have a surface hardness of 68 or greater. The surface hardness may be 80 or less. The surface hardness is based on a Shore D hardness measured on the surface of the third layer according to ASTM D2240.

In an embodiment, the third layer 30 may be an adhesive layer (see FIG. 3). In this case, the multilayer film with the elasticity of the first layer and the surface protection properties of the second layer may be conveniently adhered to other substrates.

The adhesive layer may be exposed to the outside or may face one side of the release film (not shown). The release film may be, for example, PET film, but is not limited thereto.

The second layer 20 and third layer 30 may be adhesive layers (not shown). In this case, the first layer may be conveniently bonded to other substrates by the second and third layers.

The adhesive layers may be exposed to the outside or may face one side of the release film (not shown). The release film may be, for example, PET film, but is not limited thereto.

The adhesive layer may be an acrylic-based adhesive layer, a urethane-based adhesive layer, or a silicone-based adhesive layer, and more particularly a silicone-based adhesive layer.

The silicone-based adhesive layer may be obtained by applying a silicone adhesive composition followed by drying and/or curing.

The silicone adhesive composition may comprise a silicone adhesive, a catalyst, and a solvent.

Embodiments may further comprise a silicone MQ resin to improve the adhesion of the silicone-based adhesive layer, wherein the silicone MQ resin is a polymer having at least two methyl groups on a siloxane backbone from the group of cage-like oligosiloxanes represented by the general formula RnSiXmOy. In the general formula, R may be an alkyl group having 1 to 5 carbon(s), wherein it comprises at least two methyl groups. In the general formula, X is hydrogen, a hydroxyl group, a chloride group, or an alkoxy group having 1 to 5 carbon(s). In the general formula, n, m, and y are integers from 2 to 200, respectively. Specifically, it may comprise M units (mono-terminated siloxane units) represented by R₁R₂X₃SiO_{1/2} and Q units (tetra-terminated siloxane units) represented by SiO_{4/2}. The average molecular weight may be from 2,000 g/mol to 8,000 g/mol. Applying the silicone MQ resin to the adhesive layer may improve the adhesion, especially the initial adhesion.

Silicone adhesives may be commercially available silicone adhesives that may be utilized for optical applications. Specifically, peroxide-cured silicone adhesives may be applied, and additionally reactive silicone adhesives may be applied.

Peroxide-curable silicone adhesives may comprise, for example, KR-100, KR-101-10, KR-130 from Shin-Etsu Chemical, DOWSIL SH 4280 from Dow, SilGrip PSA 510 from Momentive Performance Materials, or equivalent.

Additive reactive silicone adhesives may comprise, for example, KR-3700, KR-3701, X-40-3237, X-40-3240, X-40-3291-1 from Shin-Etsu Chemicals; DOWSIL SD4580, DOWSIL 4584, DOWSIL 4585 and DOWSIL 4587L from Dow Chemicals; SilGrip TSR1512, TSR1516 from Momentive Performance Materials; and the like or equivalent.

Silicone adhesives may benefit from the process convenience of applying an additive reactive silicone adhesive.

Silicone MQ resins may be conjunction with silicone adhesives to enhance adhesion. Silicone MQ resins comprise, for example, X-92-128, X-41-3003 from Shin-Etsu Chemicals; SilGrip SR545, SilGrip SR1000 from Momentive Performance Materials; or equivalents.

The catalyst may be a platinum catalyst, for example, a CAT-PL-50T of Shin-Etsu Chemical or the like, or an equivalent product. The catalyst may shorten the curing time so that the adhesive layer may be formed efficiently without substantially damaging the substrate even when a transparent film or substrate having a relatively heat-sensitive characteristic is applied. The adhesive layer may be formed with a thickness of 1 µm to 20 µm, and may be formed with a thickness of 4 µm to 15 µm. In this case, the adhesive layer may be relatively thin and still have excellent adhesion.

The thickness ratio of the first layer 10 and the third layer 30 may be 1: 0.01 to 20. The thickness ratio may be 1: 0.01 to 5, 1: 0.01 to 2, or 1: 0.03 to 1.2. The thickness ratio may be 1: 0.04 to 0.5, or 1: 0.05 to 0. 3. When the first layer and the third layer are applied at this thickness ratio, it is possible to provide an excellent multilayer film that exhibits both superior surface hardness and elasticity, while showing virtually no change in haze even after prolonged exposure to air.

The first layer 10 may be a more flexible layer than the third layer 30.

The storage modules of the first layer 10 may be smaller than the storage modules of the third layer 30.

At room temperature, the storage modules of the first layer 10 may be smaller than the storage modules of the third layer 30. At 0°C, the storage modules of the first layer 10 may be smaller than the storage modules of the third layer 30. At -20°C, the storage modules of the first layer 10 may be smaller than the storage modules of the third layer 30. At -40°C, the storage modulus of the first layer 10 may be smaller than the storage modulus of the third layer 30. In this case, the multilayer film may have more stable flexible properties.

The multilayer film 100 of the embodiment may further comprise a hardcoating layer 40 disposed on the second layer 20 (see FIG. 3). The hardcoating layer may be any hardcoating layer typically applied to optical films.

The multilayer film 100 may be characterized by a storage modulus of 1200 MPa or less at about 25 °C. The storage modulus may be 800 MPa or less, 500 MPa or less, or 350 MPa or less. The storage modulus of the multilayer film 100 at about 25 °C may be 60 MPa or more, or 90 MPa or more.

The multilayer film 100 may be characterized by a storage modulus of 1200 MPa or less at about 0 °C. The storage modulus may be 800 MPa or less, 500 MPa or less, or 400 MPa or less. The storage modulus of the multilayer film 100 at about 0 °C may be 100 MPa or more, or 110 MPa or more.

The storage modulus of such a multilayer film is relatively high compared to the first layer and relatively low compared to the second layer, making it suitable for use as a protective film for flexible displays. The multilayer film with this storage modulus feature are flexible and may be easily stretched to fit curved or cut surfaces, which is advantageous for use as PPF films.

The multilayer film 100 may have a haze of 3% or less, 2% or less, or 1% or less. The haze may be 0% or more, or 0.1% or more. This shows that the multilayer film has good optical properties.

The first layer 10 may have a haze of 3% or less, 2% or less, or 1% or less. The haze may be 0% or more, or 0.1% or more.

The multilayer film 100 may have a visible light transmittance of 88% or more, or 90% or more. The visible light transmittance may be 99% or less, or 95% or less. This shows that the multilayer film has good optical properties. The visible light transmittance is based on the total light transmittance according to ISO 13468.

The first layer 10 may have a visible light transmittance of 88% or more, or 90% or more. The visible light transmittance may be 99% or less, or 95% or less. The visible light transmittance is based on the total light transmittance according to ISO 13468.

The multilayer film 100 may have a transmittance yellowness index of 1 or less, 0.8 or less, 0.65 or less, or 0.6 or less. The transmittance yellowness index may be 0 or more, or 0.3 or more. This shows that the multilayer film has good optical properties.

The first layer 10 may have a transmittance yellowness index of 1 or less, 0.8 or less, 0.65 or less, or 0.6 or less. The transmittance yellowness index may be 0 or more, or 0.3 or more.

The multilayer film 100 is characterized in that the difference in haze value before and after exposure to air for 168 hours is insignificant. Specifically, the difference in haze value may be 1.2% or less, 1.0% or less, 0.8% or less, 0.5% or less, or 0.3% or less. The difference in haze value may be 0% or more, or greater than 0%. This difference in haze value is distinct from the difference that would occur if the first layer 10 were exposed to air alone, and shows that the multilayer film 100 of the embodiment may maintain its excellent optical properties for a long period of time by, for example, disposing a second layer and a third layer on one side and the other side of the first layer 10, respectively.

Polymers comprising amide residues may comprise elastic polyamide, long chain polyamide. Elastic polyamides may be, for example, Rilsan^{®} , Rilsamid^{®} from ARKEMA FRANCE.

Polymers comprising amide residues may comprise polyether block amides (PEBA). Polyether block amides may be, for example, PEBAX^{®}, PEBAX Rnew^{®} from ARKEMA FRANCE, VESTAMID^{®} E from EVONIK, and the like.

The elastomer resin may comprise, for example, a copolymer of a polyurethane block (PU) called polyetherurethane and a polyether block (PE), such as thermoplastic polyurethane (TPU).

The elastomer resin may comprise a copolyetherester (COPE) copolymer.

If the first layer 10 and the second layer 20 each independently comprise a polymeric resin comprising amide residues, the first and second layers may be manufactured by coextrusion. In this case, the first and second layers may have sufficient adhesion to prevent delamination without the formation of a separate adhesive layer between the first and second layers.

If the first layer 10, the second layer 20, and the third layer 30 each independently comprise a polymeric resin comprising amide residues, the first layer, the second layer and the third layer may be manufactured by coextrusion. In this case, the first layer, the second layer, and the third layer may have sufficient adhesion such that delamination does not occur without the formation of separate adhesive layers between the first and second layers and between the first and third layers.

When the first layer 10 and the second layer 20 each independently comprise a polymeric resin comprising amide residues, the amide residue content of the second layer may be greater than the amide residue content of the first layer per unit volume of resin. Specifically, the amide residue content per unit volume of resin of the first layer and the amide residue content per unit volume of resin of the second layer may be a weight ratio of 1: 1.3 to 8, 1: 1.3 to 7, or 1: 1.5 to 5.5 by weight. In this case, the ratio of amide residues is based on the amide residues contained in each resin (equal volume of resin). When the first layer and the second layer are composed of such contents, it is possible to prevent the optical properties of the first layer from deteriorating while at the same time reducing surface damage of the multilayer film that may be caused by scratches, etc. It is also characterized by an excellent bonding force at the interface between the first and second layers.

When the first layer 10 and the third layer 30 each independently comprise a polymeric resin comprising amide residues, the amide residue content of the third layer per unit volume of resin may be greater than the amide residue content of the first layer per unit volume of resin. Specifically, the amide residue content per unit volume of resin of the first layer and the amide residue content per unit volume of resin of the third layer may be in a weight ratio of 1:1.3 to 8, 1: 1.3 to 7, or 1: 1.5 to 5.5. When the first layer and the third layer are composed of such contents, it is possible to prevent deterioration of the optical properties of the first layer while at the same time reducing surface damage of the multilayer film that may be caused by scratches, etc. It is also characterized by excellent bonding force at the interface between the first and third layers.

As for the manufacturing method of the multilayer film, the manufacturing method of the coextruded film may be applied. For example, the multilayer film may be manufactured by adding a composition for the first layer, a composition for the second layer, and a composition for the third layer to the coextruder and coextruding. The composition for the first layer, the composition for the second layer, and the composition for the third layer may be the first polymer resin, the second polymer resin, and the third polymer resin described above, respectively. In this case, the process may be further simplified, and the first and second layers may have a better bonding force.

A method of manufacturing a multilayer film may be applied in which a coating layer is formed after manufacturing a coextruded film. A coextruded film may be manufactured by coextruding a two-layer film by adding a composition for a first layer and a composition for a second layer to a coextruder, and then forming a coating layer on the other side of the first layer and curing it to produce a multilayer film

A method for manufacturing a multilayer film may comprise feeding a composition for a first layer into an extruder to produce a first layer film, and then forming or attaching a second layer and a third layer to one side and the other side of the first layer, respectively.

During the extrusion or co-extrusion, the haze, light transmittance, etc. of the film may be controlled by controlling the surface roughness of the carrier film or the like. The surface roughness of the carrier film may exemplarily have a surface roughness Ra of 0.01 um to 0.5 um. By applying a carrier film and/or roller with such a surface roughness, a film with better optical properties may be obtained. The carrier film may be applied to a polyethylene terephthalate (PET) film or a polyethylene (PE) film, but is not limited thereto.

### Protective Film 77 and Multilayer electronic device 700

A protective film 77 according to an embodiment comprises a release layer (not shown) and a multilayer film disposed on the release layer. The release layer may be applied to a polyethylene terephthalate (PET) film or a polyethylene (PE) film but is not limited thereto. The protective film 77 may be the multilayer film 100 described above, and the specific description of the multilayer film applies to the protective film.

The multilayer electronic device 700 according to an embodiment comprises a protective film 77, a functional layer 75 disposed beneath the protective film 77, a light emitting layer 73 disposed beneath the functional layer 75, and a support layer 71 disposed beneath the light emitting layer 73 (see FIG. 4).

The protective film 77 may be applied as a cover layer of the multilayer electronic device 700.

The multilayer electronic device 700 may exemplary be a display device, such as a large-area display device, a foldable display device, a bendable display device, or a flexible display device. It may also be a bendable mobile communication device (e.g., a cell phone) or a bendable laptop.

The light-emitting layer 73 comprises an element that emits light in response to a signal in a display device. The light-emitting layer may exemplarily comprise a signal transmission layer that transmits an external electrical signal to the light-emitting layer, a chromophore disposed on the signal transmission layer and emitting light in response to the given signal, and an encapsulating layer that protects the chromophore. The signal carrier layer may a thin-film transistor (TFT), such as, but not to, LTPS, a-SiTFT, or an oxide TFT. The encapsulating layer may comprise, but is not limited to, a thin film encapsulation (TFE).

The light emitting layer may be disposed on the support layer 71. The support layer may be a layer having insulating and heat-resistant properties, for example, a polyimide film, a glass layer, a PET film, and the like.

The functional layer 75 may further comprise a sensor layer (not shown). The sensor layer may be a touch sensor or the like.

The functional layer 75 may further comprise a polarizing layer (not shown). The polarizing layer may be disposed on the light emitting layer, or may be disposed on the sensor layer.

As the protective film 77, the multilayer film 100 described above may be applied.

The protective film 77 may comprise the multilayer film 100 described above.

In this case, it is possible to provide a cover layer that combines flexibility, impact resistance, and surface strength for multilayer electronic device. It is particularly advantageous for multilayer electronic device with bending or rolling functions, and its high surface strength makes it durable even when applied as an externally exposed layer, and its good modulus characteristics can improve the ability to protect internal devices from external impacts.

### Protective film

The protective film (paint protective film, not shown) may comprise the multilayer film 100.

The protective film may be placed on the exterior finish of electronics, automobiles, furniture, etc. to protect surfaces and paintwork.

The protective film may be the multilayer film 100 described above, or it may be applied in a configuration that further comprises an adhesive layer beneath the first or third layer.

The multilayer film has optical properties, excellent impact resistance and surface hardness, making it suitable for surface protection, and its flexibility makes it easy to bond to curved or cut surfaces.

The present invention will now be described in more detail with reference to specific embodiments. The following embodiments are illustrative only to aid in understanding the invention and are not intended to limit the scope of the invention.

### 1. Preparation of the Resins

First and second layer resin compositions are shown in Table 1 below. PEBAX^{®} 72R53 (containing about 95 wt% PA11 residues as amide residue and about 5 wt% polytetramethylene glycol residues), PEBAX^{®} 40R53 (containing about 46 wt% PA11 residues as amide residue and about 54 wt% polytetramethylene glycol residues), and PEBAX^{®} 35R53 (containing approximately 31 wt% PA11 residues as amide residue and approximately 69 wt% polytetramethylene glycol residues) are commercially available polyether block amide resins, abbreviated as 72R53, 40R53, and 35R53, respectively. PEBAX^{®} Clear1200 is a polyamide-based PEBAX^{®} Clear Micro-crystalline 1200 resin, abbreviated as 1200. All of the above resins were obtained from ARKEMA FRANCE.

### 2. Preparation of Sample Film I

The films were manufactured as multilayer films using a co-extruder owned by SKC. The films in a skin-core-skin structure of a second layer, a first layer, and a third layer, each of which had a thickness of about 5*µ*m - about 40*µ*m - about 5*µ*m, resulting in a multilayer film having a thickness of about 50 µm. The single-layer film of the comparative example was extruded to have a thickness of about 50 µm. The films were stored by placing a PET protective film on both sides

### 3. Evaluating the Properties of Multilayer Films I

Optical properties and color were measured. Using a haze meter (NDH-5000W, Nippon Denshoku), the average visible light transmittance of the film samples was measured according to the ISO13468 standard, and the haze was measured according to the ISO 14782 standard.

The thickness of each layer was measured according to the manufacturer's manual using the F-20 instrument from Filmetrics. The results were taken from 3 to 5 points within the sample and the average value was used as the thickness.

The difference in haze values (delta H) between the pre- and post-exposure for 168 hours in air after removing the double-sided protective film was calculated by applying the above haze measurement method to each of the measured values.

delta H = Haze measured after 168 hours of air exposure of the sample film after removal of the double-sided protective film - Haze of the sample film immediately after removal of the double-sided protective film

The results of the above evaluation are shown in Table 1 below.

**[Table 1]**

| | | Example 1-1 | Example 1-2 | Comparison Example 1-1 | Comparison Example 1-2 |
|---|---|---|---|---|---|
| Multil ayer film | 2nd Layer | 72R53 | Clear1200 | - | - |
| | 1st Layer | 40R53 | 35R53* | 40R53 | 35R53 |
| | 3rd Layer | 72R53 | Clear1200 | - | - |
| Delta Haze (%) | | 0.1 | 0 | 1.5 | 2.3 |
| Haze (%)* | | 0.8 | 0.7 | 0.7 | 0.8 |

| | | | | | |
|---|---|---|---|---|---|
| * Haze on the sample film immediately after removing the protective film. | | | | | |

Referring to Table 1 above, the films of the Comparative Example exhibit a change in haze value, while the films of the Example exhibit virtually no change in haze value.

### 4. Preparation of sample film II and physical property evaluation II

The same as 2. Sample Film Preparation I above, a three-layer multilayer film was prepared by applying the resin described in Table 2 below. Similarly, a monolayer film with a thickness of about 50 µm was prepared.

The storage modulus (E') of each sample film was evaluated by applying TA instruments' DMA Q800 model according to ASTM D4065. The storage modulus (E') in Mpa was measured over a temperature range (-40°C to + 80°C) by applying 1 Hz, 2° C/min in DMA (Dynamic Mechanical Analysis) tension mode, and the results are shown in Table 2 for storage modulus at 0°C and 25°C respectively. The amplitude was 5 µm and the pre-force was 0.01N.

**[Table 2]**

| Unit: MPa | Comparison Example 2-1 | Comparison Example 2-2 | Example 2-1 | Example 2-2 |
|---|---|---|---|---|
| Composition Resin for Film | 35R53 | 40R53 | 72R53/35R53 /72R53* | Clear1200/35 R53/Clear120 0 |
| Measurement temperature 25°C | 37.4 | 86.52447 | 185.4 | 298.2 |
| Measurement temperature 0°C | 47.97299 | 103.32374 | 228.0926 | 322.6194 |

| | Example 2-3 | Example 2-4 | Example 2-5 | Comparison Example 2-3 |
|---|---|---|---|---|
| Composition Resin for Film | 72R53/40R53 /72R53 | 72R53/25R53 /72R53 | Clear1200/25 R53/Clear120 0 | Clear 1200 |
| Measurement temperature 25°C | 242.6 | 118.7 | 192.1 | 1244.265 |
| Measurement temperature 0°C | 289.5911 | 160.1027 | 235.3797 | 1306.83 |

| | | | | |
|---|---|---|---|---|
| * shows the stacking structure of the 2nd layer/1st layer/3rd layer * Experimentally verified that all samples in the embodiment all have a value of 0.5% corresponding to the data-Haze presented in Table 1 above. | | | | |

Referring to Table 2, Examples 2-1 to 2-5 can provide a film having a storage modulus in a range suitable for application as a protective film with substantially little haze change, having a storage modulus that is flexible and impact resistant, the optical feature of suppressing haze change over time.

The multilayer film of an embodiment may have flexible properties while suppressing changes in haze, resulting in better optical properties. The protective film and multilayer electronic device of an embodiment may provide excellent impact absorption properties and durability by applying the multilayer film.

Although preferred embodiments of the present invention have been described in detail above, the scope of the invention is not limited thereto, and various modifications and improvements by those skilled in the art utilizing the basic concepts of the invention as defined in the following claims are also within the scope of the invention.

## Claims

1. A multilayer film comprising:
a first layer having first side and second side;
a second layer disposed on the first side of the first layer; and
a third layer disposed beneath the second side of the first layer;
wherein the first layer comprises a first polymeric resin, the first polymeric resin comprises a repeating units S, and the repeating units S is an ether repeating unit or an ester repeating unit, and
wherein the multilayer film has a haze value difference of 1.2% or less before and after 168 hours of being exposed to air.

2. The multilayer film of claim 1,
wherein the first polymeric resin comprises the repeating units S of at least 20 wt%.

3. The multilayer film of claim 1,
wherein the multilayer film has a haze of 3% or less.

4. The multilayer film of claim 1,
wherein a thickness ratio of the first layer and the second layer is 1: 0.01 to 20.

5. The multilayer film of claim 1,
wherein the second layer or the third layer has a Shore D hardness of 60 or greater.

6. The multilayer film of claim 1,
wherein the multilayer film has a storage modulus at about 25°C of less than or equal to 1200 MPa and a storage modulus about 0°C of less than or equal to 1200 MPa at.

7. The multilayer film of claim 1,
wherein the second layer comprises a second polymeric resin,
the third layer comprises a third polymeric resin, and
the second polymeric resin and the third polymeric resin comprise amide repeating units.

8. The multilayer film of claim 1,
wherein the third layer is an adhesive layer.

9. A protective film comprising a release layer and a multilayer film disposed on the release layer,
wherein the multilayer film is a film according to claim 1.

10. A multilayer electronic device, comprising a multilayer film according to claim 1.
